# EUROPÄISCHE PATENTANMELDUNG

(11) **EP 4 019 777 A1**
(43) Veröffentlichungstag der Anmeldung: **29.06.2022**
(21) Anmeldenummer: 21206916.5
(22) Anmeldetag: 08.11.2021
(51) Int. Cl.: F04D 13/06, F04D 15/00

(54) **VERFAHREN ZUM BETRIEB VON FUNKTIONSMODULEN EINES KREISELPUMPENAGGREGATS, SOWIE ZUGEHÖRIGES FUNKTIONSMODUL UND KREISELPUMPENAGGREGAT**

(30) Priorität: 23.12.2020 LU 102365
(71) Anmelder: WILO SE, 44263 Dortmund (DE)
(72) Erfinder: Althaus, Dirk, 44263 Dortmund (DE); Bencak, Daniel, 44263 Dortmund (DE); Eckardt, Nils, 44263 Dortmund (DE)
(74) Vertreter: Cohausz Hannig Borkowski Wißgott

(57) **Zusammenfassung**

Die Erfindung betrifft ein Verfahren zum Betrieb, insbesondere zur Konfiguration eines elektronischen Funktionsmoduls (1) an einer Steuerungselektronik (2) eines Kreiselpumpenaggregats, mit der es verbunden ist, wobei das Funktionsmodul (1) wenigstens eine Funktionseinheit (15) und die Steuerungselektronik (2) eine Betriebssoftware (22) mit einer grafischen Benutzerschnittstelle (30) zur Vornahme von Einstellungen aufweist, deren Erscheinungsbild durch Bildrahmendaten (23) definiert ist. Dabei ist vorgesehen, dass das Funktionsmodul (1) Werte (14) von Attributen, die Eigenschaften von wenigstens einer Variablen der Funktionseinheit (15) beschreiben, an die Steuerungselektronik (2) sendet, die Steuerungselektronik (2) in Abhängigkeit von den Attributwerten (14) unter Verwendung der Bildrahmendaten (23) gemäß einem Regelwerk (24) Bildschirmdarstellungen (33, 34, 35, 36, 37) erzeugt, die von der Betriebssoftware (22) unabhängig sind und die Benutzerschnittstelle (30) zumindest temporär ergänzen, und die Bildschirmdarstellungen (33, 34, 35, 36, 37) dann einschließlich einem in einer der Bildschirmdarstellungen (34, 36, 37) integrierten Wert der Variablen auf einem Display (25) angezeigt werden. Die Erfindung betrifft ferner ein elektronisches Funktionsmodul und eine Steuerungselektronik (2) eines Kreiselpumpenaggregats, die jeweils zur Ausführung des Verfahrens eingerichtet sind.

## Beschreibung

Die Erfindung betrifft ein Verfahren zum Betrieb, insbesondere zur Konfiguration eines elektronischen Funktionsmoduls, das an eine Steuerungselektronik eines Kreiselpumpenaggregats angeschlossen ist, um die Steuerungselektronik um wenigstens eine Zusatzfunktion zu ergänzen. Des Weiteren betrifft die Erfindung ein Funktionsmodul und eine Steuerungselektronik zur Durchführung des Verfahrens.

Funktionsmodule zur Erweiterung des Funktionsumfangs eines Kreiselpumpenaggregats sind bekannt. Beispielsweise bietet die WILO SE unter der Artikelnummer 2097810 ein Funktionsmodul, auch IF-Modul genannt (IF= Interface), für deren Kreiselpumpenaggregate der Baureihe Stratos und vom Typ Trockenläufer an, das die Steuerungselektronik der Pumpe um eine serielle Kommunikationsschnittstelle für BACnet erweitert, um die Kreiselpumpe an eine Gebäudeautomation anschließen zu können. Das IF-Modul stellt sowohl den elektrischen Anschluss (RS485) für die Anbindung der Pumpe an ein BACnet als auch das notwendige Kommunikationsprotokoll bereit. Ein ebensolches Funktionsmodul bietet die WILO SE unter der Artikelnummer 2097808 an, das eine entsprechende Erweiterung der Pumpe durch den Industriestandard MODBUS erreicht. Somit kann ein Nutzer das Kreiselpumpenaggregat wahlweise ergänzen und gezielt an seine Bedürfnisse und die örtliche Kommunikationsinfrastruktur anpassen. Die beiden Funktionsmodule werden an dieselbe elektrische Schnittstelle des Kreiselpumpenaggregats angesteckt.

Für die Nutzung der IF-Module ist eine Konfiguration bestimmter Variablen bzw. Betriebsparameter erforderlich, vor allem die Vorgabe einer eindeutigen Adresse und die Festlegung der Eigenschaften der Kommunikation, wie z.B. der Baudrate, das Vorhandensein eines Paritätsbits und die Anzahl etwaiger Stoppbits. Die Konfiguration der Variablen erfolgt mittels der Steuerungselektronik des Kreiselpumpenaggregats anhand generischer Einstellungsparameter, die Teil der Betriebssoftware (Firmware, Pumpensoftware) des Kreiselpumpenaggregats sind, wobei die Einstellungsparameter den Variablen des jeweiligen IF-Moduls oder Teilen derselben logisch zugeordnet sind. Die Einstellungsparameter werden hierfür in einem Pumpenmenü auf einem Display zur Einstellung angezeigt. Um zu ermöglichen, dass die verschiedenen IF-Module an derselben elektrischen Schnittstelle betreibbar sind, ist eine Anzahl generischer Einstellungsparameter z.B. A, C, E, F, G, H vorgesehen, wobei einzelne der Einstellungsparameter für verschiedene IF-Module unterschiedliche oder sogar keine Bedeutung haben, so dass für ein bestimmtes IF-Modul nicht alle Einstellungsparameter benötigt werden. Das bedeutet aus Sicht der IF-Module, dass die Einstellungsparameter von unterschiedlichen IF-Modulen unterschiedlich interpretiert, gegebenenfalls auch nicht interpretiert werden. Die Bedeutung bzw. Zuordnung der einzelnen Einstellungsparameter zu einer entsprechenden Variable (Mapping) und die geeignete Einstellung der Einstellungsparameter für das jeweilige IF-Modul, ist in der Einbau- und Betriebsanleitung des entsprechenden IF-Moduls erläutert. So wird z.B. ein Einstellungsparameter A von den o.g. IF-Modulen als Baudrate und ein Wert 5 dieses Einstellungsparameters A als Einstellung "9600 Baud" interpretiert.

Die Einstellungsparameter, einschließlich ihres Wertebereichs, sind fester Bestandteil der Pumpensoftware, insbesondere des Pumpenmenüs. Die begrenzte Anzahl an Einstellungsparametern kann nicht erweitert werden, ebenso wenig ihr Wertebereich, der auf numerische Eingaben beschränkt ist. Hieraus resultiert der Nachteil, dass die Entwicklung neuer Funktionsmodule, die andere oder zusätzliche Einstellungsparameter, insbesondere Einstellungsparameter mit einem anderen Wertebereich benötigen, eine Anpassung der Betriebssoftware des Kreiselpumpenaggregats erfordert bzw. mit Kreiselpumpenaggregats, die eine veraltetet Betriebssoftware haben, nicht kompatible sind. Für neue Pumpen ist das unproblematisch, da diese direkt mit der neuen Firmware ausgestattet werden können. Bei Kreiselpumpen, die bereits kundenseitig installiert, d.h. "im Feld" sind oder sich in den Vertriebswegen befinden, ist dies konstruktionsbedingt nicht möglich oder selbst wenn sie über eine Updatemöglichkeit der Betriebssoftware verfügen, aus Nutzersicht unvorteilhaft. Dabei ist auch zu berücksichtigen, dass Kreiselpumpenaggregate sehr lange Produktlebenszyklen besitzen und somit viele Jahre im Einsatz sind, während Kommunikationstechnologien, insbesondere deren Protokolle, in kurzen Zyklen neu- oder weiterentwickelt werden. Ein weiterer Nachteil besteht darin, dass die Konfiguration der Variablen eines angeschlossenen Funktionsmoduls anhand der Einstellungsparameter nicht selbsterklärend ist und die Einbau- und Betriebsanleitung des jeweiligen IF-Moduls für eine korrekte Einstellung benötigt wird.

Es ist daher gemäß einem ersten Teilaspekt Aufgabe der vorliegenden Erfindung, eine Möglichkeit zu schaffen, die Entwicklung der Funktionsmodule für Kreiselpumpenaggregate einerseits und die Entwicklung der Kreiselpumpenaggregate selbst, insbesondere deren Software andererseits zu entkoppeln und sicherzustellen, dass auch zukünftig entwickelte Funktionsmodule an dem Kreiselpumpenaggregat nutzbar sind. Gemäß einem zweiten Teilaspekt ist es Aufgabe der vorliegenden Erfindung den Zugriff auf eine Variable im Funktionsmodul, insbesondere die Konfiguration eines Funktionsmoduls, die die Funktionalität eines Kreiselpumpenaggregats erweitern, für den Nutzer zu vereinfachen.

Diese Aufgaben werden durch das Verfahren mit den Merkmalen gemäß Anspruch 1 gelöst. Vorteilhafte Weiterbildungen sind in den Unteransprüchen angegeben und werden nachfolgend erläutert.

Erfindungsgemäß wird ein Verfahren zum Betrieb, insbesondere zur Konfiguration eines elektronischen Funktionsmoduls an einer Steuerungselektronik eines Kreiselpumpenaggregats, mit der es verbunden ist, vorgeschlagen, wobei das Funktionsmodul wenigstens eine Funktionseinheit aufweist, die die Steuerungselektronik um eine Zusatzfunktion ergänzt, und die Steuerungselektronik eine Betriebssoftware mit einer grafischen Benutzerschnittstelle zur Vornahme von Einstellungen am Kreiselpumpenaggregat aufweist, deren Erscheinungsbild durch Bildrahmendaten definiert ist. Beispielsweise ist die grafische Benutzerschnittstelle menübasiert, d.h. in einer hierarchischen Struktur aus Menüs und Untermenüs aufgebaut. Es besteht allerdings grundsätzlich auch die Möglichkeit, alle vornehmbaren Einstellungen in einer einzigen ganzheitlichen Bildschirmdarstellung anzuzeigen.

Bei dem Verfahren ist vorgesehen, dass
- das Funktionsmodul Werte von Attributen, die Eigenschaften von wenigstens einer Variable der Funktionseinheit beschreiben, an die Steuerungselektronik sendet,
- die Steuerungselektronik in Abhängigkeit von den Attributwerten unter Verwendung der Bildrahmendaten gemäß einem Regelwerk Bildschirmdarstellungen erzeugt, die von der Betriebssoftware unabhängig sind und die Benutzerschnittstelle zumindest temporär ergänzen, beispielsweise durch Untermenüs oder zusätzliche Icons in der ganzheitlichen Bildschirmdarstellung, und
- die Bildschirmdarstellungen, einschließlich einem in einer der Bildschirmdarstellungen integrierten Wert der Variable auf einem Display angezeigt werden.

Die vorliegende Erfindung ermöglicht es, die Funktionalität eines Kreiselpumpenaggregats durch anschließbare, insbesondere steckbare Funktionsmodule unterschiedlichen Typs zu erweitern, ohne dass das Kreiselpumpenaggregat das entsprechende Funktionsmodul a priori kennen muss. Dadurch, dass die zur Konfiguration oder auch nur zum Anzeigen von Parametern eines bestimmten Funktionsmoduls benötigten Erweiterungen in der grafischen Benutzerschnittstelle der Betriebssoftware, die in entsprechenden Bildschirmdarstellungen wiedergegeben werden, erst beim Verbinden des Funktionsmoduls mit der Steuerungselektronik erzeugt werden und somit insoweit von der Betriebssoftware der Steuerungselektronik unabhängig sind, dass sie keinen originären Bestandteil dieser bilden, können sowohl aktuelle als auch zukünftige Funktionsmodule von dem Kreiselpumpenaggregat bzw. ihrer Steuerungselektronik unterstützt werden. Die Erfindung folglich hat den Vorteil, dass bei der Entwicklung des Kreiselpumpenaggregats weder alle Funktionsmodule oder Funktionsmodultypen, noch deren Parameter der Steuerungselektronik bekannt sein müssen. Dadurch erübrigt sich zudem die Notwendigkeit einer Aktualisierung (Update) der Betriebssoftware von bereits installierten Kreiselpumpen.

Wie bereits erwähnt, kann gemäß einer Ausführungsvariante die grafische Benutzerschnittstelle menübasiert sein. Mit anderen Worten sind Einstellungen in der Betriebssoftware anhand von Menüs möglich, die in der grafischen Benutzerschnittstelle in einzelnen Darstellungsebenen hierarchisch strukturiert sind und in Abhängigkeit einer entsprechenden Auswahl einzeln angezeigt werden. Die die Benutzerschnittstelle erweiternden Bildschirmdarstellungen können dann diese Hierarchie ergänzende Untermenüs bilden, und somit eine Konfiguration des Funktionsmoduls in identischer Weise zur Kreiselpumpeneinstellung und in einem grafisch einheitlichen Design gewährleisten. Die Bildschirmdarstellungen können in diesem Fall displayausfüllend sein.

Gemäß einer anderen Ausführungsvariante kann anstelle einer Menüstruktur eine gleichzeitige Darstellung mehrerer, insbesondere sämtlicher Einstellungsparameter in einer einzigen Darstellungsebene erfolgen. Dies ist insbesondere bei großen Displays, insbesondere bei Touch-Displays, sinnvoll und ermöglicht die Wiedergabe einer hohen Informationsdichte und den direkten Zugriff auf eine Vielzahl an Parametern. Die Bildschirmdarstellungen, um die die grafische Benutzerschnittstelle erweitert wird, können in diesem Fall einzelne Grafikelemente wie z.B. Icons, Listeneinträge etc. sein, die in der einzigen Darstellungsebene genauer gesagt in einem Bereich des Displays nach dem Anstecken des Funktionsmoduls erscheinen.

Es sind darüber hinaus auch Mischformen der beiden genannten Ausführungsvarianten möglich.

Die Art des Funktionsmoduls kann beliebig sein. Beispielsweise kann das Funktionsmodul ein Kommunikationsmodul, ein Schnittstellenmodul, ein Datenmodul, ein Sensormodul oder Aktormodul sein. Ferner sind auch Kombinationen dieser Funktionalitäten möglich.

Im Falle eines Kommunikationsmoduls, stellt die Funktionseinheit des Funktionsmoduls eine bidirektionale Kommunikationsschnittstelle bereit. Diese

Kommunikationsschnittstelle kann kabelgebunden oder kabellos, z.B. funkbasiert sein. Im zweiten Fall kann man bei dem Funktionsmodul auch von einem Funkmodul sprechen. Im Besonderen kann das Funktionsmodul beispielsweise eine kabelgebundene Schnittstelle für MODBUS, BACnet oder Ethernet (TCP/IP, LAN, Internet), oder eine Funkschnittstelle für Bluetooth (BLE), WiFi (WLAN), enocean, LoRa, NFC, Zigbee oder dergleichen bereitstellen.

Im Falle eines Datenmoduls, d.h. ohne externe Kommunikationsfunktionalität bilden, stellt die Funktionseinheit des Funktionsmoduls eine Speicherfunktionalität bereit. Beispielsweise kann ein solches Datenmodul ein Datenlogger mit einem vergleichsweise großen Datenspeicher sein, um Pumpendaten, z.B. bei Feldtests, abzuspeichern, wobei das Auslesen später auf einem separaten Gerät erfolgen kann. Der Datenspeicher kann fest integriert sein oder durch ein Wechselmedium gebildet sein. Z.B. kann das Wechselmedium ein externer Speicher wie eine SD-Karte oder ein USB-Stick, der entfernbar in einen Steckplatz des Funktionsmoduls eingesetzt ist. Alternativ kann das Datenmodul ein Programmiermodul sein, das eine neue Betriebssoftware (Firmware) für die Steuerungselektronik enthält.

Im Falle eines Sensormoduls, erweitert die Funktionseinheit des Funktionsmoduls die Steuerungselektronik bzw. das Kreiselpumpenaggregat um eine zusätzliche Sensorik. Hierzu kann die Funktionseinheit zumindest einen integrierten Sensor umfassen, z.B. einen Temperatur-, Feuchtigkeits-, Vibration- oder Schallsensor.

Im Falle eines Schnittstellenmoduls, erweitert die Funktionseinheit des Funktionsmoduls die Steuerungselektronik bzw. das Kreiselpumpenaggregat um eine zusätzliche unidirektionale Schnittstelle zum Anlegen eines externen Mess- oder Steuersignals. Eine solche Schnittstelle kann z.B. ein 0-10V Eingang, ein 4-20mA Eingang, ein 1-wire Eingang oder ein PWM Eingang sein.

Im Falle eines Aktormoduls, erweitert die Funktionseinheit des Funktionsmoduls die Steuerungselektronik um eine zusätzliche Steuerfunktionalität, um ein extern zur Steuerungselektronik befindliches Gerät wie z.B. ein Stellventil, eine weitere Pumpe, ein Lüfter, eine Warnleuchte etc. anzusteuern. Beispielsweise kann die Funktionseinheit ein Relais mit potentialfreiem Schaltausgang für eine Sammelstörmeldung sein.

Wie zuvor angemerkt, sind auch Kombinationen der vorgenannten Funktionalitäten möglich. So kann das Funktionsmodul zwei oder mehr, insbesondere eine beliebige Anzahl an Funktionseinheiten enthalten, die die Steuerungselektronik jeweils um eine eigene Zusatzfunktion ergänzen. So kann jede Funktionseinheit beispielsweise eine der vorgenannten Funktionalitäten, gegebenenfalls auch typübergreifend, bereitstellen. Beispielsweise kann ein Funktionsmodul ein Kommunikationsmodul sein mit einer ersten Funktionseinheit, die eine MODBUS-Schnittstelle und einer zweiten Funktionseinheit, die eine Bacnet-Schnittstelle zur Verfügung stellt. In einer anderen Ausführungsvariante kann das Funktionsmodul eine erste Funktionseinheit in Gestalt eines Relais für eine Sammelstörmeldung (SSM) und eine zweite Funktionseinheit, die einen 0-10V Eingang bereitstellt, aufweisen.

Sofern ein Funktionsmodul nur eine einzige Funktionseinheit umfasst, braucht logisch nicht zwischen dem Funktionsmodul und der Funktionseinheit unterschieden zu werden, da das Funktionsmodul die Funktionseinheit ist, und umgekehrt. Da jedoch eine beliebige Anzahl unterschiedlichster Funktionsmodule existieren kann, die wahlweise mit der Steuerungselektronik verbunden werden können, und von denen wenigstens ein Funktionsmodul zwei oder mehr Funktionseinheiten enthalten kann, ist es aus softwaretechnischer Sicht, um eine einheitliche Behandlung zu gewährleisten, vorteilhaft, in jedem Fall zwischen Funktionsmodul und Funktionseinheit zu unterscheiden, d.h. auch wenn das Funktionsmodul nur eine einzige Funktionseinheit umfasst und diese Unterscheidung nicht notwendig wäre.

Die Funktionseinheit des Funktionsmoduls, bzw. jede Funktionseinheit kann eine beliebige Anzahl an Variablen besitzen. Sofern zwei oder mehr Variablen vorhanden sind, kann auch von einem Datensatz gesprochen werden. Bei der Variablen kann es sich um einen Betriebsparameter handeln, der für den Betrieb des Funktionsmoduls bzw. dessen entsprechender Funktionseinheit erforderlich ist. So kann der Betriebsparameter z.B. ein Passwort, eine Bus- oder Netzwerkadresse z.B. eine IPv4, IPv6 Adresse sein oder eine andere Eigenschaft der Kommunikation festlegen, wie die Übertragungsgeschwindigkeit z.B. Baudrate, das Vorhandensein eines Stoppbits etc. Im Falle eines Sensormoduls kann die Variable z.B. eine Messgröße sein, im Falle eines Aktormoduls eine Steuergröße sein. Die Variable kann alternativ eine rein logische Größe sein, deren Wert gegebenenfalls eine Funktion aktiviert oder deaktiviert, z.B. im Falle eines Datenmoduls ein Mitloggen von Daten oder das Auslösen der Übertragung eines Softwareupdates zur Steuerungselektronik. Diese Beispiele zeigen, dass die Variable konfigurierbar sein kann, d.h. dass der Zugriff auf die Variable von der Steuerungselektronik aus, lesend und schreibend ist. Eine solche Konfigurierbarkeit muss jedoch nicht unbedingt vorliegen, d.h. dass der Zugriff auf die Variable von der Steuerungselektronik aus auch nur lesend sein kann, wie z.B. bei einer Messgröße. Des Weiteren zeigen diese Beispiele, dass der Variablentyp beliebig sein kann, z.B. binär, numerisch, alphanumerisch (Text) etc.

Eine Variable wird erfindungsgemäß durch einen Satz von Attributen gebildet, die jeweils eine Eigenschaft der Variable beschreiben. Jedes Attribut besitzt einen Wert, der von dem Funktionsmodul an die Steuerungselektronik gesendet wird. Vorzugsweise weist jede Funktionseinheit eigene Attribute zu wenigstens einer Variable auf, die das Funktionsmodul an die Steuerungselektronik sendet.

Die Erfindung ermöglicht somit infolge der Unterstützung einer beliebigen Anzahl von Funktionsmodulen, einer beliebigen Anzahl von Funktionseinheiten und einer beliebigen Anzahl von Variablen sowie infolge der Unterstützung beliebiger Variablentypen ein hohes Maß an Flexibilität. Das aus Pumpe und Funktionsmodul gebildete System erhält dadurch eine vollkommen technologieoffene Gestaltung.

Erfindungsgemäß sendet das Funktionsmodul, nachdem es mit der Steuerungselektronik verbunden wurde, Werte von Attributen, die Eigenschaften der wenigstens einen Variable der Funktionseinheit beschreiben, an die Steuerungselektronik. Dies kann auf Aufforderung der Steuerungselektronik oder unaufgefordert, unmittelbar nach dem verbinden erfolgen. Die Attribute sind der Funktionseinheit zugeordnet. Sie bilden einen Teil einer Konstitutionsbeschreibung des Funktionsmoduls.

Weiter erzeugt die Steuerungselektronik die Bildschirmdarstellungen erfindungsgemäß in Abhängigkeit von den Attributwerten der Variable oder

Variablen. Die Bildschirmdarstellungen stellen eine Visualisierung bestimmter Inhalte dar, die zur Anzeige auf einem Display vorgesehen sind, um sie dem Nutzer anzuzeigen. Die Inhalte sind z.B. Untermenüs, insbesondere auch der aktuelle Wert der wenigstens einen Variable. Die Erzeugung der Bildschirmdarstellungen erfolgt unter Verwendung der Bildrahmendaten gemäß einem Regelwerk. Die Bildrahmendaten stellen Vorlagen (Templates) dar, die die grafische Benutzerschnittstelle (Englisch GUI = Graphical User Interface) verwendet, um Menüs und Untermenüs der Betriebssoftware der Steuerungselektronik einheitlich zu visualisieren. Durch die Verwendung dieser Bildrahmendaten erfolgt der Zugriff auf das Funktionsmodul in einer Visualisierungsumgebung, die einheitlich ist mit der übrigen grafischen Benutzerschnittstelle zur Einstellung der Kreiselpumpen. Die Steuerungselektronik stellt für die verschiedenen Variablentypen nur vordefinierte Bildrahmendaten (Screen-Typen) zu deren Darstellung und Modifikation zur Verfügung.

Das Regelwerk stellt einen Algorithmus dar, der die Attributwerte liest und interpretiert, indem er die Bildrahmendaten mit Inhalten füllt, wobei die Inhalte selbst, als auch deren Darstellung innerhalb der Bildrahmendaten durch die Attributwerte bestimmt ist. Die erzeugten Bildschirmdarstellungen sind von der Betriebssoftware der Steuerungselektronik unabhängig, in dem Sinn, dass sie weder ganz noch teilweise bereits vor dem Verbinden des Funktionsmoduls Teil der Betriebssoftware bzw. der grafischen Benutzerschnittstelle waren. Infolge der Erzeugung der Bildschirmdarstellungen werden diese einschließlich der Untermenüs, die sie visualisieren, Bestandteil der Betriebssoftware und der grafischen Benutzerschnittstelle. Dies kann dauerhaft, vorzugsweise allerdings nur temporär sein, geeigneterweise solange das Funktionsmodul mit der Steuerungselektronik verbunden ist.

Weiter erfindungsgemäß werden die Bildschirmdarstellungen, respektive das entsprechende Untermenü, welches die Bildschirmdarstellung visualisiert, auf dem Display angezeigt. Dies erfolgt selektiv, d.h. in Abhängigkeit der Auswahl des entsprechenden Untermenüs durch einen Nutzer. Dabei wird der Wert der Variable in einer der Bildschirmdarstellungen integriert und entsprechend angezeigt.

Sofern die Variable ein konfigurierbarer Betriebsparameter ist, kann die Steuerungselektronik, insbesondere während der Wert der Variable in der entsprechenden Bildschirmdarstellung angezeigt wird, eine Nutzereingabe erwarten, bei der der Variablen ein Wert zugewiesen und in der Steuerungselektronik zumindest temporär abgespeichert bzw. zwischengespeichert wird. Anschließend kann der Wert an das Funktionsmodul übertragen und dort gespeichert werden, so dass das Funktionsmodul bezüglich dieses Betriebsparameters konfiguriert wird.

Vorzugsweise kann vorgesehen sein, dass eine Kennung der wenigstens einen Funktionseinheit in eine Bildschirmdarstellung integriert wird, die Teil der Betriebssoftware ist, um die Funktionseinheit des Funktionsmoduls anwählen zu können. Die Bildschirmdarstellung existiert somit bereits zum Zeitpunkt der Verbindung des Funktionsmoduls mit der Steuerungselektronik. Sie wird jedoch um eine Kennung der Funktionseinheit ergänzt. Im Falle mehrerer im Funktionsmodul vorhandener Funktionseinheiten wird die Bildschirmdarstellung durch jeweils eine Kennung von jedem der Funktionseinheiten ergänzt, so dass die Bildschirmdarstellung eine Übersicht aller verfügbaren Funktionseinheiten enthält. In dieser Bildschirmdarstellung kann dann die Funktionseinheit angewählt bzw. im Falle mehrerer Funktionseinheiten die entsprechende Funktionseinheit ausgewählt werden. Hierfür erwartet die Steuerungselektronik dann eine entsprechende Nutzereingabe in Form einer Anwahl des oder Auswahl einer der Funktionseinheiten über die entsprechende Kennung.

Besonders benutzerfreundlich ist es, wenn die Kennung ein Name der Funktionseinheit ist. Dieser kann dann in Klartext in der Bildschirmdarstellung angezeigt werden, so dass ein Nutzer in selbsterklärender Weise erkennt, auf welche Funktionseinheit bzw. Funktionalität des angeschlossenen Funktionsmoduls er durch Auswahl dieser Kennung bei der vorgenannten Nutzereingabe zugreift.

Gemäß einer Ausführungsvariante wird für jede Funktionseinheit eine eigene Bildschirmdarstellung erzeugt. Diese Bildschirmdarstellung ist bzw. Bildschirmdarstellungen sind bevorzugt der Bildschirmdarstellung, die die Kennung(en) der Funktionseinheit(en) enthält, nachgeordnet, so dass sich eine hierarchische Menüstruktur ergibt, die geeigneterweise die Menüstruktur der Betriebssoftware der Steuerungselektronik fortsetzt. Die Bildschirmdarstellung, die die Kennung(en) der Funktionseinheit(en) enthält, bildet somit eine übergeordnete Bildschirmdarstellung und wird als solche nachfolgend bezeichnet. Mit anderen Worten visualisiert eine einer Funktionseinheit zugeordnete Bildschirmdarstellung ein Untermenü zu dem Menü, das in der übergeordneten Bildschirmdarstellung visualisiert wird und der An- oder Auswahl der entsprechenden Funktionseinheit dient. Vorzugsweise wird die einer bestimmten Funktionseinheit zugeordnete Bildschirmdarstellung auf dem Display angezeigt, wenn die entsprechende Funktionseinheit bzw. deren Kennung in der übergeordneten Bildschirmdarstellung ausgewählt wird. Je nach Größe des Displays ist es jedoch auch möglich, dass die übergeordnete Bildschirmdarstellung und die Bildschirmdarstellung(en) für die Funktionseinheit(en) gleichzeitig auf dem Display dargestellt werden.

Es trägt weiterhin zur Benutzerfreundlichkeit bei, wenn (auch) in der jeweiligen Bildschirmdarstellung eine bzw. die Kennung derjenigen Funktionseinheit integriert wird, der diese Bildschirmdarstellung zugeordnet ist.

Vorzugsweise wird in der jeweiligen, einer Funktionseinheit zugeordneten Bildschirmdarstellung eine Kennung der wenigstens einen Variable, insbesondere zumindest aller leseberechtigten Variablen der Funktionseinheit integriert. Die Steuerungseinheit erwartet dann über die entsprechende Kennung eine Anwahl des oder Auswahl einer der Variablen.

Vorzugsweise sendet das Funktionsmodul die Anzahl der im Funktionsmodul vorhandenen Funktionseinheiten an die Steuerungselektronik. Hierdurch wird die Steuerungselektronik informiert, wie viele Funktionseinheitenkennungen in die übergeordnete Bildschirmdarstellung integriert werden müssen und /oder wie viele Funktionseinheit-bezogene Bildschirmdarstellungen bzw. Untermenüs erzeugt werden müssen. Somit kann die Steuerungselektronik eine der Anzahl entsprechende Anzahl an Bildschirmdarstellungen erzeugen.

Gemäß einer Ausführungsvariante wird für jede Variable eine untergeordnete Bildschirmdarstellung erzeugt. Diese kann der Bildschirmdarstellung derjenigen Funktionseinheit nachgeordnet sein, welcher die jeweilige Variable zugeordnet ist. Somit wird die hierarchische Menüstruktur fortgesetzt. Eine einer Funktionseinheit zugeordnete Bildschirmdarstellung, bildet somit eine übergeordnete Bildschirmdarstellung. Mit anderen Worten visualisiert eine einer Variablen zugeordnete Bildschirmdarstellung ein Untermenü zu dem Menü, das in der Funktionseinheit-bezogenen Bildschirmdarstellung visualisiert wird und der An- oder Auswahl der entsprechenden Variable dient. Vorzugsweise wird die einer bestimmten Variable zugeordnete Bildschirmdarstellung auf dem Display angezeigt, wenn die entsprechende Variable bzw. deren Kennung in der Funktionseinheit-bezogenen Bildschirmdarstellung ausgewählt wird. Je nach Größe des Displays ist es jedoch auch möglich, dass die Funktionseinheit-bezogene Bildschirmdarstellung und die Bildschirmdarstellung(en) für die Variable(en) gleichzeitig auf dem Display dargestellt werden.

Vorzugsweise wird in der jeweiligen untergeordneten Bildschirmdarstellung eine Kennung derjenigen Variable integriert, der diese Bildschirmdarstellung zugeordnet ist. Somit wird der Nutzer informiert, dass er sich tatsächlich in dem zuvor von ihm ausgewählten Menü befindet, um Zugriff auf die Variable zu erhalten.

Besonders benutzerfreundlich ist es, wenn die Kennung ein Name der Variable ist. Dieser kann dann in Klartext in der Bildschirmdarstellung angezeigt werden, so dass ein Nutzer in selbsterklärender Weise erkennt, auf welche Variable er durch Auswahl dieser Kennung bei der vorgenannten Nutzereingabe zugreift. Für eine Konfiguration benötigt der Benutzer somit nicht zwingend eine Einbau- und Betriebsanleitung des Funktionsmoduls.

Sinnvollerweise erfolgt eine Wiedergabe des aktuellen Werts der Variable in der untergeordneten Bildschirmdarstellung. Sofern es sich um eine konfigurierbare oder schreibberechtigte Variable handelt, kann die Steuerungselektronik eine Nutzereingabe erwarten, um die Variable zu ändern oder ihr einen Wert vorzugeben.

Vorzugsweise sendet das Funktionsmodul die Anzahl der Variablen der jeweiligen Funktionseinheit an die Steuerungselektronik. Hierdurch wird die Steuerungselektronik informiert, wie viele Variablenkennungen in die Funktionseinheit-bezogene Bildschirmdarstellung integriert werden müssen und /oder wie viele untergeordnete Bildschirmdarstellungen bzw. Untermenüs erzeugt werden müssen. Somit kann die Steuerungselektronik eine der Anzahl an Variablen entsprechende Anzahl untergeordneter Bildschirmdarstellungen erzeugen.

In einer Ausführungsvariante umfasst das Funktionsmodul Hauptattribute, die Eigenschaften der jeweiligen Funktionseinheit beschreiben. Das Funktionsmodul kann Werte dieser Hauptattribute an die Steuerungselektronik senden, die dann diese Werte bei der Erzeugung der Bildschirmdarstellungen verwendet. Beispielsweise kann eines der Hauptattribute die Kennung der Funktionseinheit bzw. eine der Funktionseinheiten enthalten. Ferner kann eines der Hauptattribute die Anzahl der Variablen der jeweiligen Funktionseinheit enthalten.

In einer Ausführungsvariante umfassen die Attribute der wenigstens einen Variable Grundattribute und wenigstens ein variablenspezifisches Attribut, das oder die von einem der Grundattribute abhängig ist/sind. So kann beispielsweise die Anzahl der variablenspezifischen Attribute und/ oder der Gegenstand, den sie beschreiben, von den Grundattributen abhängig sein. Demgegenüber können die Anzahl der Grundattribute und/ oder deren Inhalt für jede Variable und jedes Funktionsmodul identisch sein. Vorzugsweise definieren die variablenspezifischen Attribute die Art und Weise der Wiedergabe der Variablen in der entsprechenden Bildschirmdarstellung und/ oder die Art- und Weise der Vorgabe des Variablenwerts bei der Nutzereingabe, wie nachfolgend noch verdeutlich wird.

Die Gesamtheit der Hauptattribute, Grundattribute und variablenspezifischen Attribute bildet eine Konstitutionsbeschreibung, die in dem Funktionsmodul gespeichert ist.

Die Grundattribute können beispielsweise eines der folgenden Attribute umfassen:
- ein Attribut, das einen Klartextnamen der Variable angibt,
- ein Attribut, das die Lese- und/ oder Schreibrechte für die Variable angibt,
- ein Attribut, das angibt, ob die Variable aus einem Einzelwert oder einem Feld mit Einzelwerten besteht,
- ein Attribut, das den Variablentyp definiert, insbesondere ob es sich um einen numerischen Wert (Zahl), ein Listenelement einer Auswahlliste oder um eine Zeichenkette handelt,
- ein Attribut, das den speichertechnisch verwendeten Datentyp der Variable angibt, insbesondere ob es sich um eine ganze Zahl (Integer) oder eine Gleitkommazahl handelt und/ oder wie viele Bits den Betriebsparameterwert repräsentieren, und/ oder
- ein Attribut, das den aktuellen Wert der Variable angibt.

Durch die Angabe des Variablentyps in einem der Grundattribute ist die Art der Vorgabe des Werts der Variable in der Nutzereingabe festgelegt, sofern es sich bei der Variable um eine konfigurierbare Variable handelt. Bevorzugt kann die Steuerungselektronik deshalb in Abhängigkeit des angegebenen Variablentyps einen bestimmten von mehreren Editoren für eine Nutzereingabe aktivieren, während die entsprechende untergeordnete Bildschirmdarstellung angezeigt wird.

Wenn eines der Grundattribute angibt, dass der Variablentyp ein numerischer Wert ist, insbesondere die Vorgabe des Werts der Variablen durch Eingabe einer Zahl zu erfolgen hat, können die variablenspezifischen Attribute wenigstens eines der folgenden Attribute umfassen:
- ein Attribut, das die in der untergeordneten Bildschirmdarstellung anzuzeigende physikalische Einheit der Variable oder das Fehlen einer solchen angibt,
- ein Attribut, das die für Berechnungen zu verwendende physikalische Einheit der Variable oder das Fehlen einer solchen angibt,
- ein Attribut, das einen maximalen Einstellwert der Variable für die Nutzereingabe angibt,
- ein Attribut, das einen minimalen Einstellwert der Variable für die Nutzereingabe angibt,
- ein Attribut, das die Schrittweite einer Änderung der Variable für die Nutzereingabe angibt,
- ein Attribut, das ein in der erzeugten Bildschirmdarstellung anzuzeigendes Zahlenformat des Werts der Variable angibt,
- ein Attribut, das die Anzahl in der erzeugten Bildschirmdarstellung anzuzeigender Nachkommastellen angibt
- ein Attribut, das die Anzahl in der erzeugten Bildschirmdarstellung anzuzeigender Vorkommastellen angibt.

Diese variablenspezifischen Attribute definieren einerseits die Gestalt der Wiedergabe des Variablenwerts in der Bildschirmdarstellung (Zahlenformat, Vor- und Nachkommastellen, physikalische Einheit) und legen andererseits die Art und Weise der Wertvorgabe fest (Schrittweite, Minimal-/ Maximalwert).

Erfindungsgemäß ist vorgesehen, dass die Steuerungselektronik in Abhängigkeit der Werte der Attribute die Bildschirmdarstellungen erzeugt und / oder eine weitere Aktion durchführt.

Gemäß einer Ausführungsvariante kann die Wiedergabe des Werts der Variablen in der entsprechenden Bildschirmdarstellung mit führenden Nullen aufgefüllt werden, wenn der Wert der Variable eine Anzahl von Vorkommastellen aufweist, die kleiner ist, als eine Anzahl anzuzeigender Vorkommastellen, die in einem Attribut, insbesondere einem variablenspezifischen Attribut der Variable definiert ist. Zusätzlich oder alternativ kann die Wiedergabe des Werts der Variable in der Bildschirmdarstellung auf eine Anzahl anzuzeigender Nachkommastellen begrenzt werden, die in einem Attribut, insbesondere einem variablenspezifischen Attribut der Variable definiert ist.

Gemäß einer Ausführungsvariante kann der bei der Nutzereingabe eingebbare Wertebereich auf einen minimalen und/ oder maximalen Einstellwert der Variable begrenzt werden, der oder die jeweils in einem Attribut, insbesondere einem variablenspezifischen Attribut der Variable definiert ist/ sind.

Gemäß einer Ausführungsvariante kann die Eingabe des Werts der Variablen bei der Nutzereingabe auf eine Schrittweite festgelegt werden, die in einem Attribut, insbesondere einem variablenspezifischen Attribut der Variable definiert ist.

Gemäß einer Ausführungsvariante kann die Wiedergabe des Werts der Variablen in der Bildschirmdarstellung mit einer physikalischen Einheit erfolgen, die in einem Attribut, insbesondere einem variablenspezifischen Attribut der Variable definiert ist. Gemäß einer Ausführungsvariante kann die Steuerungselektronik für die Nutzereingabe einen numerischen Editor aktivieren, wenn eines der Attribute, insbesondere ein Grundattribut, angibt, dass der Datentyp der Variable numerisch ist.

Gemäß einer Ausführungsvariante kann die Steuerungselektronik für die Nutzereingabe eine durch die Attribute, insbesondere die variablenspezifischen Attribute definierte Liste mit Optionen in die Bildschirmdarstellung integrieren, wenn eines der Attribute, insbesondere ein Grundattribut angibt, dass der Datentyp der Variable eine Auswahlliste ist.

Gemäß einer Ausführungsvariante kann die Steuerungselektronik für die Nutzereingabe einen alphanumerischen Editor aktivieren, insbesondere in die den Variablenwert anzeigende Bildschirmdarstellung integrieren, wenn eines der Attribute, insbesondere ein Grundattribut angibt, dass der Datentyp der Variable eine Zeichenkette ist.

Gemäß einer Ausführungsvariante kann die Steuerungselektronik eine Eingabe durch den alphanumerischen Editor auf eine Maximalzeichenlänge begrenzen, die in einem Attribut der Variable, insbesondere in einem variablenspezifischen Attribut definiert ist.

Nach der Ab- bzw. Zwischenspeicherung des Werts kann die Steuerungselektronik eine Änderungsmitteilung an das Funktionsmodul senden, wonach das Funktionsmodul den geänderten Wert der Variable von der Steuerungselektronik abruft und abspeichert. Die Steuerungselektronik stellt den geänderten Variablenwert in diesem Fall lediglich zum Abruf bereit. Dies hat den Vorteil, dass die Pumpenelektronik nur eine Server-Funktionalität, jedoch keine Client-Funktionalität benötigt. Ferner wird durch die Verwendung der Änderungsmitteilung das Kommunikationsaufkommen (Overhead) an der Schnittstelle minimiert. Alternativ kann die Übermittlung des geänderten Werts von der Steuerungselektronik an das Funktionsmodul direkt erfolgen.

Es ist von Vorteil, wenn eine Überprüfung des eingegebenen Werts im Funktionsmodul erfolgt. Somit braucht die Steuerungselektronik keine Bedingungen zu kennen, die bei der Überprüfung abgeprüft werden. Eine solche Überprüfung kann beispielsweise beinhalten, ob für eine Variable, deren Wert eine Netzwerkadresse angibt, eine korrekte Netzwerkadresse wie z.B. eine IPv4-Adresse angegeben wurde, oder ob für eine Variable, deren Wert ein Passwort enthält, dieses Passwort bestimmten Mindestanforderungen genügt wie z.B. Zeichenlänge, Diversität der Zeichen etc.

Vorzugsweise sendet das Funktionsmodul eine Fehlermeldung an die Steuerungselektronik, wenn die Überprüfung ergibt, dass der eingegebene Wert unzulässig ist. Sinnvoll ist es ferner, wenn die Fehlermeldung einen Fehlergrund enthält. Dies unterstützt den Benutzer bei der Korrektur der Eingabe und erhöht somit die Benutzerfreundlichkeit. Zudem kann vorgesehen sein, dass die Steuerungselektronik unter Verwendung der Bildrahmendaten eine einen Fehler anzeigende Bildschirmdarstellung erzeugt. Diese kann vorzugsweise den Fehlergrund enthalten. Für die Erzeugung der Bildschirmdarstellung kann aus den Bildrahmendaten eine solche Vorlage ausgewählt werden, die speziell zur Visualisierung von Fehlern vorgesehen ist.

Des Weiteren betrifft die Erfindung allgemein einerseits ein elektronisches Funktionsmodul zur Ausführung des vorgenannten Verfahrens, soweit sich das Verfahren auf das Funktionsmodul bezieht und andererseits auf eine Steuerungselektronik zur Ausführung des vorgenannten Verfahrens, soweit sich das Verfahren auf die Steuerungselektronik bezieht.

Im Besonderen betrifft die Erfindung ein elektronisches Funktionsmodul, das an eine Steuerungselektronik eines Kreiselpumpenaggregats anschließbar ist, um die Steuerungselektronik um wenigstens eine Zusatzfunktion zu ergänzen, umfassend
- eine Steuereinheit, insbesondere einen Prozessor,
- eine die Zusatzfunktion bereitstellende Funktionseinheit,
- einen nicht-flüchtigen Speicher, in dem eine Betriebssoftware und der Wert wenigstens einer Variable der Funktionseinheit gespeichert ist, und
- eine elektrische Kommunikationsschnittstelle zur insbesondere steckbaren Verbindung des Funktionsmoduls mit der Steuerungselektronik,
wobei die Steuereinheit mit der Funktionseinheit, dem Speicher und der Kommunikationsschnittstelle verbunden ist. In dem Speicher sind Werte von Attributen gespeichert, die Eigenschaften von wenigstens einer Variable der Funktionseinheit beschreiben. Erfindungsgemäß ist das Funktionsmodul eingerichtet, das Verfahren gemäß zumindest einem der vorbeschriebenen Aspekte auszuführen, soweit sich das Verfahren auf das Funktionsmodul bezieht. So ist das Funktionsmodul zumindest eingerichtet, die Attributwerte über die Kommunikationsschnittstelle an die Steuerungselektronik zu senden.
Im Besonderen betrifft die Erfindung ferner eine Steuerungselektronik eines Kreiselpumpenaggregats, insbesondere auch ein Kreiselpumpenaggregat mit einer solchen Steuerungselektronik, an die ein elektronisches Funktionsmoduls anschließbar ist, um die Steuerungselektronik um wenigstens eine Zusatzfunktion zu ergänzen, umfassend
- eine Steuereinheit, insbesondere einen Prozessor,
- einen nicht-flüchtigen Speicher, in dem eine Betriebssoftware mit einer menübasierten grafischen Benutzerschnittstelle zur Vornahme von Einstellungen am Kreiselpumpenaggregat, und Bildrahmendaten gespeichert sind, die das Erscheinungsbild der grafischen Benutzerschnittstelle definieren, und
- eine elektrische Kommunikationsschnittstelle zur insbesondere steckbaren Aufnahme des Funktionsmoduls,
wobei die Steuereinheit mit dem Speicher und der Kommunikationsschnittstelle verbunden ist und mit einem Display und gegebenenfalls einem Bedienelement in Wirkverbindung steht. In dem Speicher ist ein Regelwerk zur Erzeugung von Bildschirmdarstellungen aus den Bildrahmendaten gespeichert. Erfindungsgemäß ist die Steuerungselektronik eingerichtet, das Verfahren gemäß zumindest einem der vorbeschriebenen Aspekte auszuführen, soweit sich das Verfahren auf die Steuerungselektronik bezieht.

So ist die Steuerungselektronik zumindest eingerichtet,
- Werte von Attributen, die Eigenschaften wenigstens einer Variable der Funktionseinheit beschreiben, über die Kommunikationsschnittstelle zu empfangen,
- in Abhängigkeit von den Attributwerten unter Verwendung der Bildrahmendaten gemäß einem in dem Speicher hinterlegten Regelwerk Bildschirmdarstellungen zu erzeugen, die von der Betriebssoftware unabhängig sind und die Benutzerschnittstelle zumindest temporär durch Untermenüs ergänzen, und
- die Bildschirmdarstellungen selektiv, einschließlich einem in einer der Bildschirmdarstellungen integrierten Wert der Variablen auf dem Display zur Anzeige zu bringen.

Vorzugsweise ist die Steuerungselektronik ebenfalls eingerichtet,
- eine Nutzereingabe zu erwarten, bei der mit Hilfe der entsprechenden Bildschirmdarstellung der Variablen ein Wert zugewiesen und abgespeichert wird, und
- den Wert anschließend über die Kommunikationsschnittstelle an das Funktionsmodul zu übertragen.

Das Display kann baulich ein Teil der Steuerungselektronik sein. Es ist jedoch ebenfalls möglich, dass das Display Teil eines externen Geräts ist, wie beispielsweise ein Computer, ein Smartphone oder ein Tablet. Die Steuerungselektronik steht in diesem Fall kommunikationstechnisch mit diesem externen Gerät in Verbindung und überträgt zu diesem die Bildschirmdarstellungen, zumindest Teile davon, oder Daten zur Erzeugung entsprechender Bildschirmdarstellungen seitens des externen Geräts, die anschließend auf dem Display angezeigt werden.

Gemäß einer Ausführungsvariante erfolgt die Darstellung der grafischen Benutzerschnittstelle respektive der Bildschirmdarstellungen innerhalb eines Browsers, der auf der Steuerungselektronik oder dem externen Gerät betrieben wird. Entsprechend können die Bildschirmdarstellungen in einer Markup-Sprache wie beispielsweise HTML erstellt sein.

Die Erfindung betrifft schließlich auch ein Set aus einer Steuerungselektronik eines Kreiselpumpenaggregats der vorgenannten Art und einem ersten und einem zweiten Funktionsmodul der vorgenannten Art, die sich in der die Steuerungselektronik ergänzenden Zusatzfunktion unterscheiden und wahlweise an die Steuerungselektronik, insbesondere an dieselbe Kommunikationsschnittstelle der Steuerungselektronik bzw. an denselben Steckplatz anschließbar sind.

Weitere Merkmale, Vorteile, Eigenschaften und Wirkungen der Erfindung werden nachfolgend anhand von Ausführungsbeispielen und der beigefügten Figuren erläutert.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Es zeigen:
Fig. 1: eine schematische Darstellung einer Steuerungselektronik und eines damit verbindbaren Funktionsmoduls
Fig. 2a+b: eine Konstitutionsbeschreibung des Funktionsmoduls mittels Attributen
Fig. 3: ein Struktogramm eines Regelwerks zur Erzeugung von Bildschirmdarstellungen
Fig. 4: eine Darstellung erzeugter Bildschirmdarstellung in hierarchischer Anordnung
Fig. 5a+b: ein Ablaufdiagramm des Verfahrens.

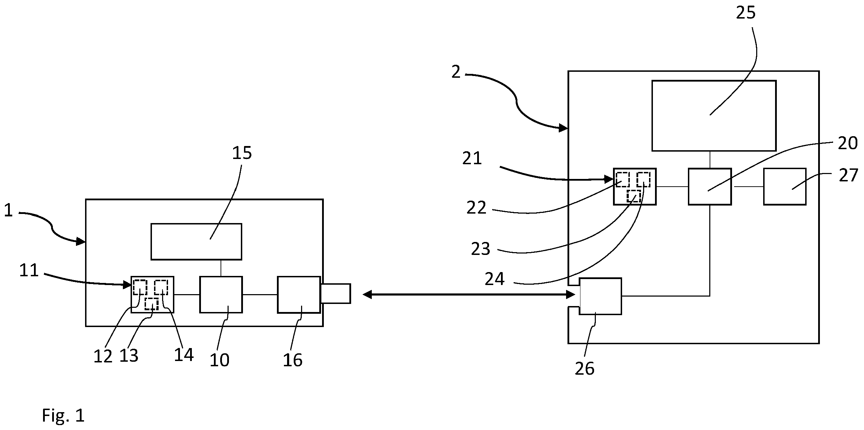

Figur 1 veranschaulicht den Grundaufbau eines erfindungsgemäßen Funktionsmoduls 1 sowie einer Steuerungselektronik 2 eines nicht dargestellten elektromotorischen Kreiselpumpenaggregats. Die Steuerungselektronik 2 weist eine Steuereinheit 20 in Gestalt eines Prozessors, einen nicht-flüchtigen Speicher 21, wenigstens ein Bedienelement 27, ein Display 25 und eine elektrische Kommunikationsschnittstelle 26, über die das Funktionsmodul 1 mit der Steuerungselektronik steckbar verbunden werden kann. Obgleich das Bedienelement 27 funktional getrennt vom Display 25 dargestellt ist, kann es mit diesem in einer Ausführungsvariante baulich eine Einheit, z.B. eine

berührungssensitive Oberfläche des Displays 25 bilden. Geeigneterweise umfasst die Steuerungselektronik 2 auch einen hier nicht dargestellten Frequenzumrichter zur Ansteuerung und Versorgung des Elektromotors der Kreiselpumpe. Speicher 21, Display 25, Bedienelement 27 und Kommunikationsschnittstelle 26 sind datentechnisch mit der Steuereinheit 20 verbunden.

In dem Speicher 21 ist eine Betriebssoftware 22 für die Steuerungselektronik 2 einschließlich der Kreiselpumpe gespeichert. Die Betriebssoftware umfasst eine grafische Benutzeroberfläche (GUI - Graphical User Interface) zur Vornahme von Einstellungen am Kreiselpumpenaggregat und zum Zugriff auf Informationen der Steuerungselektronik sowie Pumpendaten. Sie ist durch Bildschirmdarstellungen gebildet, die auf dem Display 25 angezeigt werden und Menüs visualisieren. Die Bildschirmdarstellungen sind aus Bildrahmendaten 23 erstellt, die das Erscheinungsbild der grafischen Benutzerschnittstelle definieren und die ebenfalls im Speicher 21 hinterlegt sind. Zudem ist in dem Speicher 21 ein Regelwerk 24 hinterlegt, das Bildschirmdaten aus den Bildrahmendaten in Abhängigkeit bestimmter Vorgaben erstellt, wie nachfolgend noch verdeutlicht wird.

Die Kommunikationsschnittstelle 26 umfasst eine Steckaufnahme, in die das Funktionsmodul 1 eingesteckt werden kann. Hierfür weist das Funktionsmodul 1 seinerseits eine Kommunikationsschnittstelle 16 auf, die hier in Form eines Steckers ausgebildet ist. Das Funktionsmodul 1 ist displaylos. Steuerungselektronik 2 besitzt vor dem Verbinden keine Informationen über das Funktionsmodul 1.

Das Funktionsmodul 1 umfasst eine Funktionseinheit 15, die die Steuerungselektronik 2 um eine Zusatzfunktion erweitert. In dem Beispiel gemäß Figur 1 handelt es sich bei der Funktionseinheit 15 um eine Bluetooth Schnittstelle. Mit anderen Worten handelt es sich bei dem Funktionsmodul 1 um ein Kommunikationsmodul, insbesondere um ein Bluetooth-Modul. Es erweitert die Steuerungselektronik 2 folglich um eine Bluetooth Kommunikationsfunktion, um mit anderen Bluetooth-fähigen Geräten wie z.B. Smartphones oder Tablets kommunizieren zu können. Alternativ oder zusätzlich könnte das Funktionsmodul 1 auch eine andere oder weitere Funktionalität beinhalten.

Das Funktionsmodul 1 weist außerdem eine Steuereinheit 10 in Gestalt eines Prozessors und einen nicht-flüchtigen Speicher 11 auf. In dem Speicher 11 sind eine Betriebssoftware12 für das Funktionsmodul 1, sowie eine durch Attribute gebildete Konstitutionsbeschreibung 13 und deren Werte 14. Die Attribute beschreiben Eigenschaften des Funktionsmoduls, der Funktionseinheit und von wenigstens einer Variablen der Funktionseinheit. Speicher 11, Funktionseinheit 15, und Kommunikationsschnittstelle 16 sind datentechnisch mit der Steuereinheit 10 verbunden.

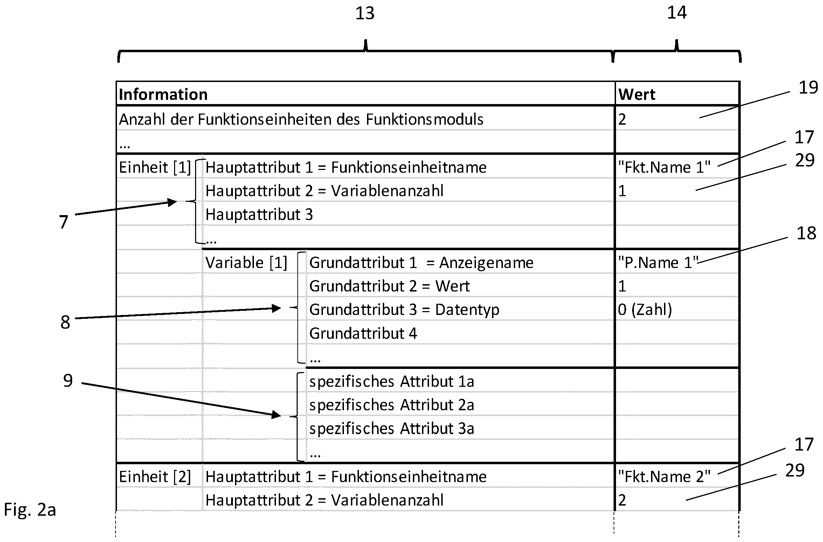

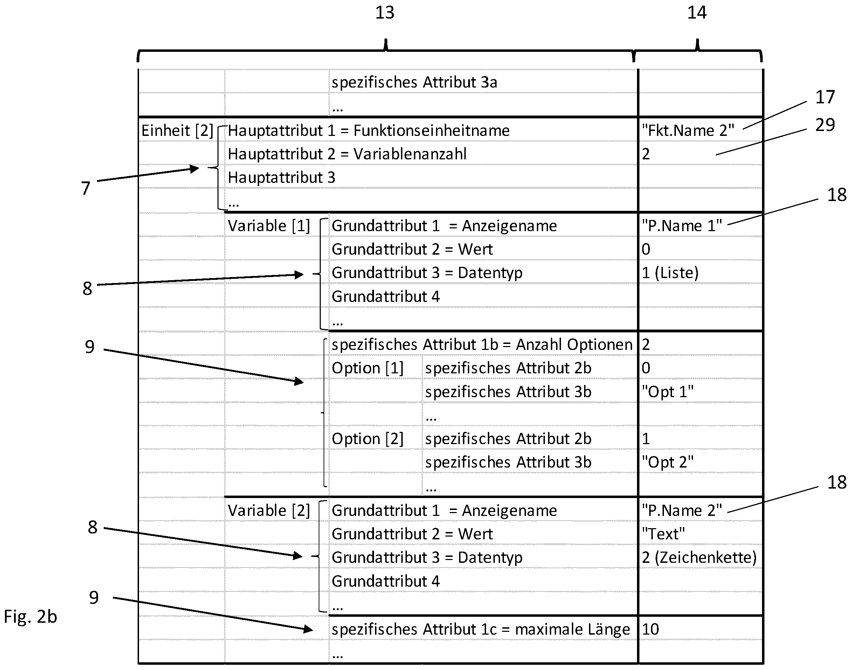

Figuren 2a und 2b veranschaulichen eine Konstitutionsbeschreibung 13 eines Funktionsmoduls 1 gemäß einer anderen Ausführungsvariante, bei der das Funktionsmodul 1 zwei Funktionseinheiten beinhaltet, die in Figuren 2a und 2b als Einheit [1] und Einheit [2] bezeichnet sind. Beispielsweise ist c eine MODBUS Schnittstelle und Einheit [2] eine Bacnet-Schnittstelle.

Die Konstitutionsbeschreibung 13 umfasst eine Angabe der Anzahl 19 der im Funktionsmodul 1 enthaltenen Funktionseinheiten. Diese Angabe kann als Generalattribut bezeichnet werden. Der Wert 19 dieses Generalattributs ist hier 2. Im Fall von Figur 1 ist der Wert 1.

Die Konstitutionsbeschreibung 13 umfasst des Weiteren Angaben zu der oder den vorhandenen Funktionseinheiten, hier zu der ersten Funktionseinheit "Einheit [1]" und der zweiten Funktionseinheit "Einheit [2]". Diese Angaben betreffen einerseits allgemeine Informationen über die jeweilige Funktionseinheit und Informationen betreffend eine oder mehrere Variablen, die die jeweilige Funktionseinheit verwendet. Die allgemeinen Informationen sind in Hauptattributen 7 enthalten. Diese existieren identisch bei allen Funktionseinheiten, allerdings mit unterschiedlichen Werten.

In dem Beispiel gemäß Figur 2a, 2b gibt ein erstes Hauptattribut 1 eine Kennung 17 in Gestalt eines Namens der Funktionseinheit an. So hat die erste Funktionseinheit Einheit [1] die Kennung "Fkt.Name 1" und die zweite Funktionseinheit Einheit [2] die Kennung "Fkt.Name 2". Ein weiteres Hauptattribut 2 gibt die Anzahl 29 an Variablen an, die die entsprechende Funktionseinheit besitzt. So ist die Variablenanzahl 29 bei der ersten Funktionseinheit "1" und bei der zweiten Funktionseinheit "2".

Die die Variablen betreffenden Informationen sind logisch unterteilt einerseits in allgemeine Informationen, welche in Grundattributen 8 enthalten sind, und andererseits in individuelle Informationen, die in variablenspezifischen Attributen 9 enthalten sind. Die Grundattribute 8 existieren identisch bei allen Variablen, allerdings mit unterschiedlichen Werten.

In dem Beispiel gemäß Figur 2a, 2b gibt ein erstes Grundattribut 1 eine Kennung 18 in Gestalt eines Namens der Variable an. So haben die Variable [1] der ersten Funktionseinheit [1] und die erste Variable [1] der zweiten Funktionseinheit jeweils die Kennung "P. Name 1", und die zweite Variable [2] der zweiten Funktionseinheit [2] die Kennung "P. Name 2". Ein weiteres Grundattribut 2 gibt den Wert der jeweiligen Variable an.

Ferner ist dem Beispiel ein drittes Grundattribut 3 vorgesehen, das den Datentyp der Variable angibt. Dieser Datentyp kann beispielsweise ein numerischer Wert bzw. eine Zahl, eine Aufzählung oder eine Zeichenkette sein. Im vorliegenden Fall steht der Wert 0 von Grundattribut 3 für den Variablentyp "Zahl", der Wert 1 für den Variablentyp "Aufzählung" und der Wert 2 für den Variablentyp "Zeichenkette". Diese Kodierung kann selbstverständlich auch ganz anders sein. Sie dient hier nur dem Verständnis. Der Variablentyp gibt außerdem an, wie die Vorgabe des Werts der Variablen durch die Nutzereingabe zu erfolgen hat.

Die Grundattribute 8 können des Weiteren folgende Informationen umfassen:
- ein Attribut, das die Lese- und/ oder Schreibrechte für die Variable angibt,
- ein Attribut, das angibt, ob die Variable aus einem Einzelwert oder einem Feld mit Einzelwerten besteht,
- ein Attribut, das den speichertechnisch verwendeten Datentyp der Variable angibt, insbesondere ob es sich um eine ganze Zahl (Integer) oder eine Gleitkommazahl handelt und/ oder wie viele Bits den Betriebsparameterwert repräsentieren und/ oder
- ein Attribut, das eine Kennung zur eindeutigen Identifizierung einer Variable angibt, um diese ansprechen und deren Wert lesen und schreiben zu können.

Die variablenspezifischen Attribute 9 können in ihrer Anzahl und ihrem Inhalt variieren. Dies hängt vom Variablentyp bzw. von dem Grundattribut 8 ab, das den Typ der Variable angibt.

Im Fall der Variable [1] der ersten Funktionseinheit [1], die vom Typ "Zahl" ist, umfassen die spezifischen Attribute 1a, 2a, 3a, etc. z.B. Folgendes:
- ein Attribut, das eine anzuzeigende physikalische Einheit der Variable oder das Fehlen einer solchen angibt,
- ein Attribut, das eine physikalische Einheit der Variable oder das Fehlen einer solchen angibt, die beim Lesen und Schreiben oder Speichern des Variablenwertes verwendet wird,
- ein Attribut, das einen maximalen Einstellwert der Variable für die Nutzereingabe angibt,
- ein Attribut, das einen minimalen Einstellwert der Variable für die Nutzereingabe angibt,
- ein Attribut, das die Schrittweite einer Änderung der Variable für die Nutzereingabe angibt,
- ein Attribut, das ein in der erzeugten Bildschirmdarstellung anzuzeigendes Zahlenformat des Werts der Variable angibt,
- ein Attribut, das die Anzahl in der erzeugten Bildschirmdarstellung anzuzeigender Nachkommastellen angibt
- ein Attribut, das die Anzahl in der erzeugten Bildschirmdarstellung anzuzeigender Vorkommastellen angibt.

Im Fall der ersten Variable [1] der zweiten Funktionseinheit [2], die vom Typ "Aufzählung" ist, definieren die spezifischen Attribute 1b, 2b, 3b, etc. eine Liste mit Optionen 1 bis z. Dabei gibt ein erstes spezifisches Attribut 1b die Anzahl z an Optionen an, ein zweites spezifisches Attribut 2b eine Nummer der entsprechenden Option an und ein drittes spezifisches Attribute 3b einen Namen der entsprechenden Option an. In dem Beispiel gemäß Fig. 2b existieren zwei Optionen [1] und [2], die die Optionsnummern 0 und 1 sowie die Namen "Opt 1" und "Opt 2" tragen. Option [1] ist ausgewählt, da der aktuelle Wert der ersten Variablen [1], bzw. ihres Grundattributs 2, gleich der Optionsnummer der ersten Option [1] ist, d.h. dem Wert des zweiten spezifischen Attributs 2b von Option [1] entspricht. Diese Kodierung kann selbstverständlich auch ganz anders sein. Sie dient hier nur dem Verständnis.

Im Fall der zweiten Variable [2] der zweiten Funktionseinheit [2], die vom Typ "Zeichenkette" ist, existiert lediglich ein spezifisches Attribut 1c. Dieses gibt die maximale Länge der Zeichenkette an.

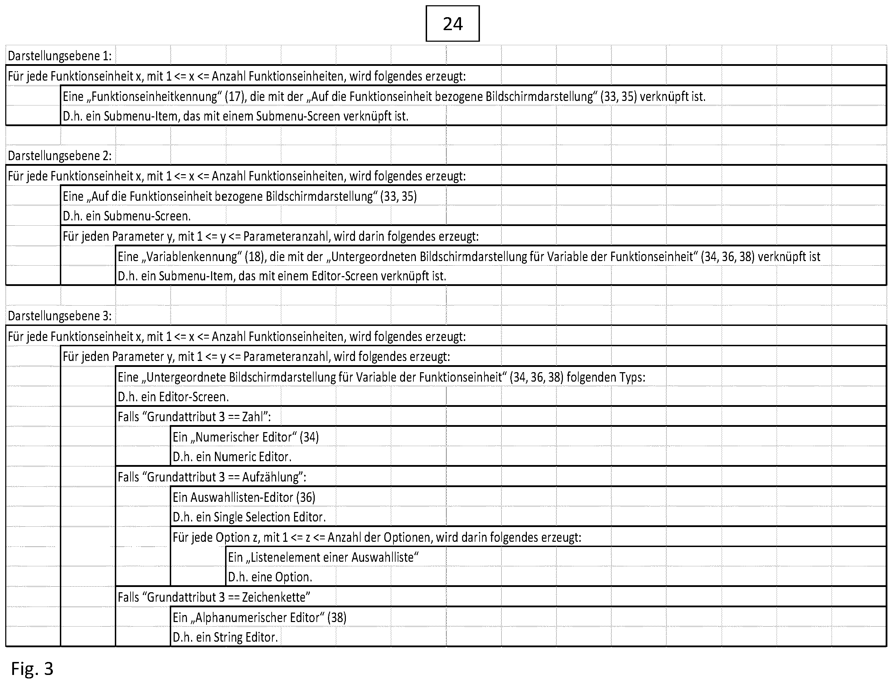

Wie die vorstehende Erläuterung verdeutlicht, definieren die variablenspezifischen Attribute 9 einerseits, wie eine Wiedergabe des Variablenwerts auf dem Display 25 zu erfolgen hat, z.B. bezüglich Zahlenformat, Anzahl Vor- und Nachkommastellen oder der physikalischen Einheit. Sie legen andererseits die Art und Weise der Wertvorgabe fest wie z.B. die Schrittweite, einen Minimal- oder Maximalwert, Auswahlliste, Textvorgabe. In ihrer Gesamtheit stellt die Konstitutionsbeschreibung 13 samt der zugehörigen Attributwerte 14 somit eine umfassende datentechnische Beschreibung des Funktionsmoduls 1 dar, um einen Zugriff auf die Variable oder Variablen im Funktionsmodul 1 zu ermöglichen. Dies veranschaulichen Figuren 3, 4 und 5a, 5b.

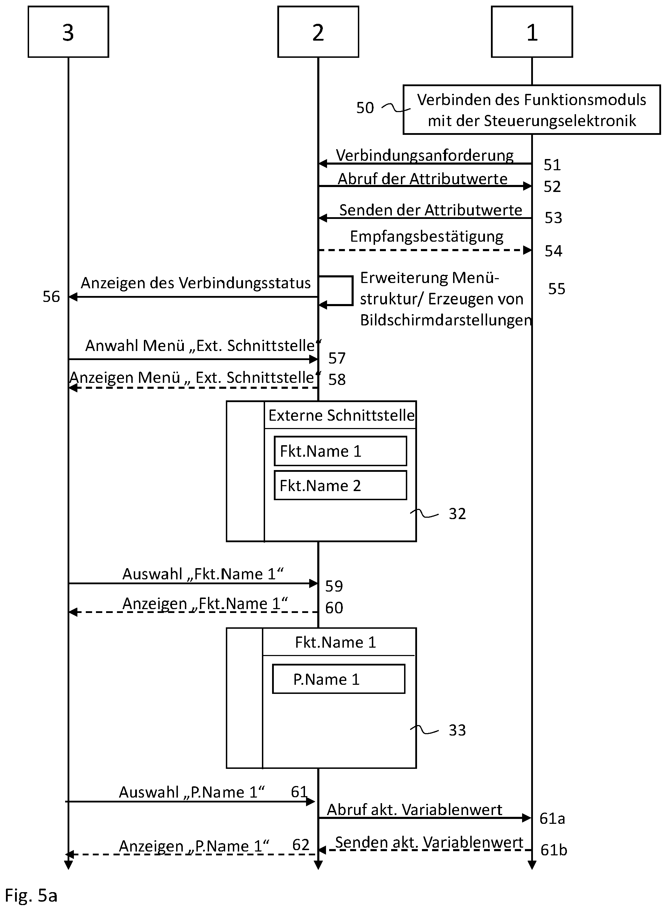

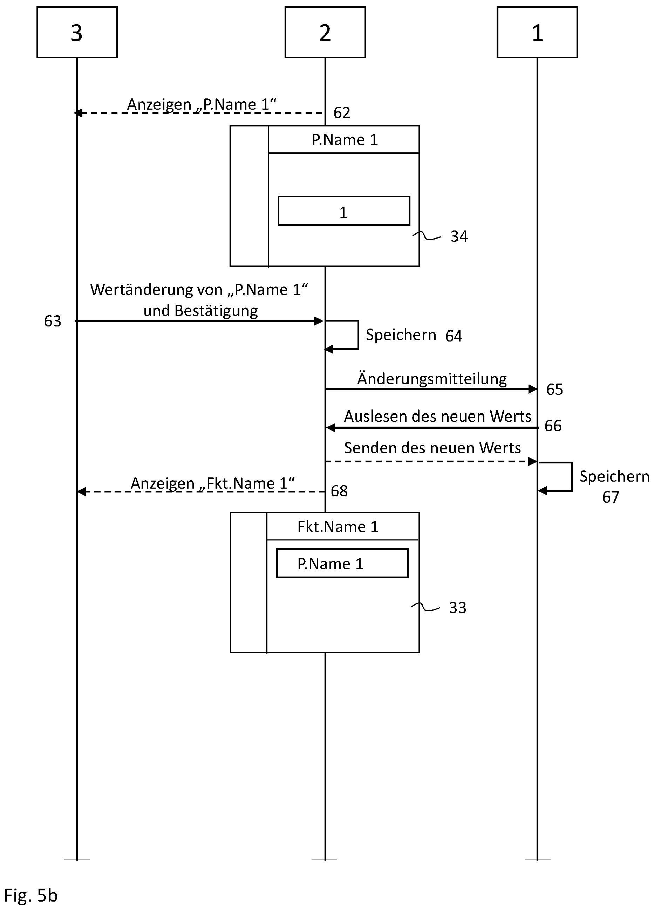

Figuren 5a und 5b zeigen ein Ablaufdiagramm bzw. Interaktionsdiagramm für ein beispielhaftes Verfahren gemäß der Erfindung. Zu Beginn des Verfahrens wird ein Funktionsmodul 1 von einem Nutzer 3 mit der Steuerungselektronik 2 verbunden, Schritt 50. Im vorliegenden Beispiel wird dasjenige Funktionsmodul 1 verwendet, dessen Konstitutionsbeschreibung 13 in Figuren 2a, 2b dargestellt ist. Die gestrichelten Pfeile im Ablaufdiagramm stellen Antworten auf Anfragen dar.

Nach dem Verbinden richtet das Funktionsmodul 1 eine Verbindungsaufforderung an die Steuerungselektronik 2, Schritt 51. Die Steuerungselektronik 2 ruft anschließend die Attributwerte 14, d.h. die Werte des Generalattributs, sowie der Hauptattribute 7, Grundattribute 8 und der variablenspezifischen Attribute 9 aus dem Funktionsmodul 1 ab, Schritt 52, welches diese entsprechend überträgt, Schritt 53. Die Steuerungselektronik 2 speichert die Werte 14 temporär zwischen. Sie kann außerdem eine Empfangsbestätigung an das Funktionsmodul 1 übermitteln, Schritt 54. Es sei angemerkt, dass es für das erfindungsgemäße Verfahren und dessen Funktionalität keine Rolle spielt, welche Seite die Verbindung aufbaut bzw. mit dem Verbindungsaufbau anfängt. So kann in einer alternativen Variante zu Fig. 5a die Verbindungsaufforderung von der Steuerungselektronik 2 ausgehen bzw. an das Funktionsmodul 1 gerichtet sein.

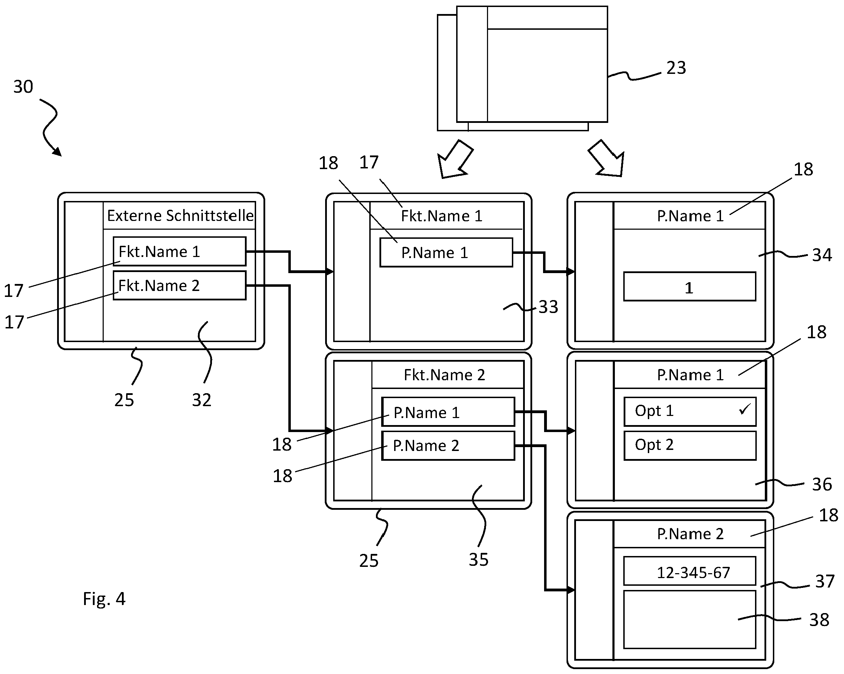

Anschließend erweitert die Steuerungselektronik 2 in Abhängigkeit von den Attributwerten 14 die Menüstruktur seiner Betriebssoftware 22, um einen Zugriff auf die im Funktionsmodul 1 enthaltenen Variablen zu ermöglichen, Schritt 55. Dies wird anhand von Figur 4 veranschaulicht.

Dabei wird einerseits eine Bildschirmdarstellung 32, die Teil der Betriebssoftware 22 ist und die Kommunikationsschnittstelle 26 betrifft durch Angaben aus der Konstitutionsbeschreibung 13 gefüllt bzw. ergänzt. Hierzu wird die Anzahl 19 der im Funktionsmodul 1 vorhandenen Funktionseinheiten aus dem Generalattribut sowie die Kennung der jeweiligen Funktionseinheit verwendet, indem die Steuerungselektronik 2 für jede der beiden Funktionseinheiten [1] und [2] die entsprechende Kennung 17 in die Bildschirmdarstellung 32 integriert, welche zu einer übergeordneten Bildschirmdarstellung wird.

Außerdem erzeugt die Steuerungselektronik 2 in Abhängigkeit von den Attributwerten 14 unter Verwendung der Bildrahmendaten 23 gemäß dem Regelwerk 24 Bildschirmdarstellungen 33, 34, 35, 36, 37, die von der Betriebssoftware 22 unabhängig sind, d.h. in der Menüstruktur der grafischen Benutzeroberfläche 30 zuvor nicht vorhanden waren. Die Bildschirmdarstellungen ergänzen diese Menüstruktur zumindest temporär, d.h. solange das Funktionsmodul 1 an die Steuerungselektronik angeschlossen ist.

Es wird für jede Funktionseinheit [1], [2] eine eigene Bildschirmdarstellung 33, 35 oder mit anderen Worten ein eigenes Menü erzeugt, über die bzw. über das ein Zugriff auf die entsprechende Funktionseinheit eingerichtet wird. Diese Funktionseinheit-bezogenen Bildschirmdarstellung 33, 35 werden der übergeordneten Bildschirmdarstellung 32 hierarchisch nachgeordnet, indem durch Auswahl der Kennung der ersten Funktionseinheit [1] in der übergeordneten Bildschirmdarstellung 32 die dieser ersten Funktionseinheit [1] zugeordnete Bildschirmdarstellung 33 aufgerufen werden kann, und durch Auswahl der Kennung der zweiten Funktionseinheit [2] in der übergeordneten Bildschirmdarstellung 32 die dieser zweiten Funktionseinheit [2] zugeordnete Bildschirmdarstellung 35 aufgerufen werden kann. In der jeweiligen Funktionseinheit-bezogenen Bildschirmdarstellung 33, 35 wird ebenfalls die Kennung derjenigen Funktionseinheit integriert, der diese Bildschirmdarstellung zugeordnet ist. Außerdem wird in der jeweiligen Funktionseinheit-bezogenen Bildschirmdarstellung 33, 35 eine Kennung der Variable (Bildschirmdarstellung 33) bzw. aller Variablen (Bildschirmdarstellung 35) integriert.

Außerdem wird auch für jede Variable eine Bildschirmdarstellung 34, 36, 37 erzeugt. Der Steuerungselektronik 2 ist die Anzahl der Variablen aus den zweiten Hauptattributen der beiden Funktionseinheiten bekannt. Somit werden im vorliegenden Beispiel drei Variablen-bezogene Bildschirmdarstellungen 34, 36, 37 erzeugt. Sie dienen der Anzeige des jeweiligen Variablenwerts, insbesondere aber auch seiner Editierung im Rahmen einer Nutzereingabe, jedenfalls sofern die entsprechende Variable änderbar ist, was nicht unbedingt der Fall sein muss, z.B. im Falle eines Messwerts. Der Variablenwert wird deshalb in die entsprechende Variablen-bezogene Bildschirmdarstellung 34, 36, 37 integriert. Außerdem wird in der jeweiligen Variablen-bezogenen Bildschirmdarstellung eine Kennung derjenigen Variable integriert, der diese Bildschirmdarstellung 34, 36, 37 zugeordnet ist. Jede der Variablen-bezogenen Bildschirmdarstellungen 34, 36, 37 ist einer Funktionseinheit-bezogenen Bildschirmdarstellung 33, 35 untergeordnet, und zwar derjenigen, die der entsprechenden Funktionseinheit zugeordnet ist, zu welcher auch die jeweilige Variable gehört. Somit wird die hierarchische Menüstruktur fortgesetzt. Eine untergeordnete Bildschirmdarstellung 34, 36, 37 wird durch eine entsprechende An- oder Auswahl der Kennung der Variablen in der Funktionseinheit-bezogenen Bildschirmdarstellung 33, 35 aufgerufen.

So kann also die erste untergeordnete Bildschirmdarstellung 34, die der Variablen der ersten Funktionseinheit zugeordnet ist, aufgerufen und auf dem Display 25 angezeigt werden, indem die Kennung der Variable in der der ersten Funktionseinheit [1] zugeordneten Bildschirmdarstellung 33 angewählt wird. Weiter kann die zweite untergeordnete Bildschirmdarstellung 36, die der ersten Variablen der zweiten Funktionseinheit zugeordnet ist, aufgerufen und auf dem Display 25 angezeigt werden, indem die Kennung der ersten Variable [1] in der der zweiten Funktionseinheit [2] zugeordneten Bildschirmdarstellung 35 ausgewählt wird. Und schließlich kann die dritte untergeordnete Bildschirmdarstellung 37, die der zweiten Variablen [2] der zweiten Funktionseinheit [2] zugeordnet ist, aufgerufen und auf dem Display 25 angezeigt werden, indem die Kennung der zweiten Variable [2] in der der zweiten Funktionseinheit [2] zugeordneten Bildschirmdarstellung 35 ausgewählt wird. Mit anderen Worten visualisiert eine einer Variablen zugeordnete Bildschirmdarstellung 34, 36, 37 ein Untermenü zu demjenigen Menü, das in der Funktionseinheit-bezogenen Bildschirmdarstellung 33, 35 visualisiert wird und der An- oder Auswahl der entsprechenden Variablen dient.

Bei der ersten untergeordneten Bildschirmdarstellung 34 wird für die Nutzereingabe ein numerischer Editor aktiviert, und die Steuerungselektronik 2 erwartet eine entsprechende Nutzereingabe. Der Wert der Variablen der ersten Funktionseinheit [1] beträgt hier 1. Dieser numerische Wert kann über den numerischen Editor verändert werden, welcher beispielsweise über das Bedienelement 27 bedient werden kann.

In der zweiten untergeordneten Bildschirmdarstellung 36 werden die Optionen der Aufzählung angezeigt. Der Wert der ersten Variablen [1] der zweiten Funktionseinheit [2] ist hier beispielhaft 0, was bedeutet, dass Option [1] ausgewählt oder gültig ist. Bei Option [1] kann es sich beispielsweise um ein "Aktiviert" und bei Option [2] um ein "Deaktiviert" handeln. Bei der zweiten untergeordneten Bildschirmdarstellung 36 erwartet die Steuerungselektronik 2 eine Nutzereingabe in Gestalt einer Auswahl einer der Optionen. Dies entspricht einem "Auswahl-Editor". Dadurch, dass in der angezeigten Aufzählung nur bestimmte Optionen enthalten sind, werden fehlerhafte Benutzereingaben im Vorhinein reduziert.

Bei der dritten untergeordneten Bildschirmdarstellung 37 wird für die Nutzereingabe ein alphanumerischer Editor 38 aktiviert, und die Steuerungselektronik 2 erwartet eine entsprechende Nutzereingabe. Der alphanumerische Editor 38 wird in die den Variablenwert anzeigende Bildschirmdarstellung 37 integriert, indem in einem Bereich der Bildschirmdarstellung 37 eine Übersicht alphanumerischer Zeichen und Symbole dargestellt wird. Der Wert der zweiten Variablen [2] der zweiten Funktionseinheit [2] beträgt "12-345-67". Diese Zeichenkette kann über den alphanumerischen Editor 38 geändert werden, indem die einzelnen Zeichen nacheinander über das Bedienelement 27 aus der dargestellten Zeichenübersicht ausgewählt werden. Eine Prüfung der geänderten Zeichenkette erfolgt durch das Funktionsmodul, wobei dieses das Ergebnis der Prüfung sowie einen spezifischen Fehlertext zur Verfügung stellt.

Um die einzelnen Bildschirmdarstellungen 33, 34, 35, 36, 37 zu erzeugen, wird das Regelwerk 24 ausgeführt, das in der Speichereinheit 21 der Steuerungselektronik 2 hinterlegt ist. Das Regelwerk 24 beschreibt, wie aus den Attributwerten und unter Verwendung der Bildrahmendaten, d.h. sogenannter Screen-Typen, neue Bildschirmdarstellungen erzeugt werden. Das Regelwerk 24 liest die Attributwerte 14 der Konstitutionsbeschreibung 13 ein und interpretiert sie. Das Regelwerk 24 mit der Struktur zum Einlesen der Attributwerte 14 ist in Fig. 3 dargestellt. Diese Struktur entspricht dem Aufbau der Konstitutionsbeschreibung 13 bezüglich der Attribute der Funktionseinheit. Insoweit kennt die Steuerungselektronik 2 den Aufbau der Konstitutionsbeschreibung 13.

Unter anderem erzeugt das Regelwerk 24 für jede Funktionseinheit nacheinander die entsprechende Bildschirmdarstellung 33, 35, integriert darin die Kennung der jeweiligen Funktionseinheit sowie die Kennung(en) der Variable(n) der jeweiligen Funktionseinheit, erzeugt für jede Variable eine untergeordnete Bildschirmdarstellung 34, 36, 37, integriert darin die Kennung der jeweiligen Variable sowie unter Berücksichtigung des Variablentyps deren Wert bzw. im Falle einer Aufzählung deren Optionen, und aktiviert gegebenenfalls einen bestimmten Editor. Bei der Wiedergabe des Variablenwerts berücksichtigt das Regelwerk 24 die in den Attributen angegebenen Formatangaben, die sich auf die Darstellung beziehen wie die Anzahl an Vorkommastellen und Nachkommastellen, das Zahlenformat, die Einheit etc. Des Weiteren konfiguriert das Regelwerk 24 auch den Editor in Abhängigkeit der Attributwerte 14, z.B. bezüglich der Schrittweite einer Wertänderung, und/ oder einem minimalen und maximalen Einstellwert.

Wie Fig. 5a weiter zeigt, kann während der Erzeugung der Bildschirmdarstellungen 33, 34, 35, 36, 37 auf dem Display 25 ein Verbindungsstatus angezeigt werden, Schritt 56, um den Nutzer 3 darüber zu informieren, dass das Funktionsmodul mit der Steuerungselektronik verbunden ist und damit das Einstecken des Funktionsmoduls erfolgreich war.

Entweder automatisch oder durch eine manuelle Anwahl des Nutzers 3 in Schritt 57 kann nach der Erzeugung der Bildschirmdarstellungen 33, 34, 35, 36, 37 das Menü "Externe Schnittstelle" in der übergeordneten Bildschirmdarstellung 32 angezeigt werden, Schritt 58, über das ein Zugriff auf die Variablen der Funktionseinheiten des Funktionsmoduls 1 bereitgestellt wird, das an die Kommunikationsschnittstelle 26 angeschlossen ist. In der übergeordneten Bildschirmdarstellung 32 sind die verfügbaren Funktionseinheiten durch eine Kennung Fkt.Name 1 und Fkt.Name 2 angezeigt. Beispielsweise steht Fkt.Name 1 für eine MODBUS Kommunikationsschnittstelle und Fkt.Name 2 für eine BACnet Kommunikationsschnittstelle, zu der jeweils eine Einstellung eines Betriebsparameters oder mehrerer Betriebsparameter vorgenommen werden kann.

Die Steuerungseinheit 2 erwartet dann eine Nutzereingabe in Form einer Auswahl einer der Funktionseinheiten über die entsprechende Kennung. Rein beispielhaft wird die erste Funktionseinheit "Fkt.Name 1" ausgewählt, Schritt 59.

Anschließend wird die erzeugte, der ersten Funktionseinheit zugeordnete Bildschirmdarstellung 33 auf dem Display 27 angezeigt, Schritt 60. Diese Bildschirmdarstellung 33 listet die Variablen, insbesondere nur die leseberechtigten Variablen auf. Im Falle der ersten Funktionseinheit liegt jedoch nur eine einzige Variable vor, die nicht nur lesbar, sondern auch beschreibbar ist. Ihre Kennung "P. Name 1" wird in der Bildschirmdarstellung 33 angezeigt. Beispielsweise handelt es sich bei dieser Variable um die MODBUS RTU (Remote Terminal Unit) Adresse.

Die Steuerungseinheit 2 erwartet dann eine Nutzereingabe in Form einer An- und anschließender Auswahl der einen Variablen über die Kennung "P.Name 1". Dies erfolgt in Schritt 61. Für den Fall, dass die in den Schritten 52, 53 gelesenen Attributwerte nur statische Informationen (z.B. in Form einer Datei) enthalten, die ausgewählte Variable jedoch einen dynamischen Wert enthält, erfolgt nach dem Schritt 61 noch das Lesen des aktuellen Variablenwertes aus dem Modul 1, Schritte 61a, 61b.

Anschließend wird eine der Variablen der ersten Funktionseinheit [1] zugeordnete, untergeordnete Bildschirmdarstellung 34 erzeugt und auf dem Display 27 angezeigt, Schritt 62. Diese Bildschirmdarstellung 34 zeigt den gegebenenfalls editierbaren Wert der Variablen an, hier die Zahl 1. Es wird ein numerischer Editor aktiviert, der über das Bedienelement 27 gesteuert wird. Der Editor berücksichtigt weitere Eigenschaften der Variablen, die in den variablenspezifischen Attributen 9 definiert sind. Entsprechend dieser Eigenschaften wird die Nutzereingabe beispielsweise auf eine bestimmte Schrittweite und / oder einen Wertebereich zwischen einem definierten Minimalwert und einem definierten Maximalwert beschränkt. Fehlerhafte Benutzereingaben können dadurch im Vorhinein minimiert werden. Die Steuerungselektronik 2 erwartet eine entsprechende Nutzereingabe, mit der der Wert der Variablen der ersten Funktionseinheit [1] verändert wird. Diese Wertänderung erfolgt in Schritt 63.

Die Steuerungselektronik 2 speichert den geänderten Wert temporär zwischen, Schritt 64, und sendet eine Mitteilung über die Änderung des Variablenwerts an das Funktionsmodul 1, Schritt 65. Das Funktionsmodul 1 liest anschließend den neuen Variablenwert aus dem Speicher 21 der Steuerungselektronik 2 aus, Schritt 66, und speichert ihn ab, Schritt 67. Die Steuerungselektronik 2 verlässt anschließend die Bildschirmdarstellung 34 für die Variable "P.Name 1" und kehrt zu der der ersten Funktionseinheit zugeordneten Bildschirmdarstellung 33. Auch diese Bildschirmdarstellung 33 kann anschließend verlassen werden, da die Einstellung der Variablen abgeschlossen ist.

Im Gegensatz zum Stand der Technik erfolgt die Konfiguration von Betriebsparametern bei dem erfindungsgemäßen Verfahren nicht indirekt über Einstellungsparameter, die vom jeweiligen Funktionsmodul interpretiert werden, vielmehr werden die Betriebsparameter über entsprechende Variablen direkt eingestellt. D.h. ein vom Nutzer 3 am Display eingestellter Werte entspricht direkt dem Wert des zu konfigurierenden Betriebsparameters/ der Variable, so dass seitens des Funktionsmoduls 1 keine Interpretation der Variable erforderlich ist.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

### Bezugszeichenliste

- 1: Funktionsmodul
- 2: Steuerungselektronik
- 3: Nutzer
- 7: Hauptattribute
- 8: Grundattribute
- 9: Spezifische Attribute
- 10: Steuereinheit Funktionsmodul
- 11: Speichereinheit Funktionsmodul
- 12: Betriebssoftware Funktionsmodul
- 13: Konstitutionsbeschreibung
- 14: Gespeicherte Attributwerte
- 15: Funktionseinheit mit spezifischer Funktionalität
- 16: Kommunikationsschnittstelle, modulseitig
- 17: Funktionseinheitkennung
- 18: Variablenkennung
- 19: Anzahl an Funktionseinheiten
- 20: Steuereinheit Steuerungselektronik
- 21: Speichereinheit Steuerungselektronik
- 22: Betriebssoftware Steuerungselektronik
- 23: Bildrahmendaten einer grafischen Benutzerschnittstelle
- 24: Regelwerk zur Erzeugung von Bildschirmdarstellungen
- 25: Display
- 26: Kommunikationsschnittstelle der Steuerungselektronik
- 27: Bedienelement
- 29: Variablenanzahl einer Funktionseinheit
- 30: Grafische Benutzerschnittstelle (GUI)
- 32: Übergeordnete Bildschirmdarstellung
- 33: Auf die erste Funktionseinheit bezogene Bildschirmdarstellung
- 34: Untergeordnete Bildschirmdarstellung für Variable der ersten Funktionseinheit
- 35: Auf die zweite Funktionseinheit bezogene Bildschirmdarstellung
- 36: Untergeordnete Bildschirmdarstellung für erste Variable der zweiten Funktionseinheit
- 37: Untergeordnete Bildschirmdarstellung für zweite Variable der zweiten Funktionseinheit
- 38: Alphanumerischer Editor
- 50 - 68:: Verfahrensschritte

## Patentansprüche

1. Verfahren zum Betrieb, insbesondere zur Konfiguration eines elektronischen Funktionsmoduls (1) an einer Steuerungselektronik (2) eines Kreiselpumpenaggregats, mit der es verbunden ist, wobei das Funktionsmodul (1) wenigstens eine Funktionseinheit (15) aufweist, die die Steuerungselektronik (2) um eine Zusatzfunktion ergänzt, und die Steuerungselektronik (2) eine Betriebssoftware (22) mit einer grafischen Benutzerschnittstelle (30) zur Vornahme von Einstellungen am Kreiselpumpenaggregat aufweist, deren Erscheinungsbild durch Bildrahmendaten (23) definiert ist, **dadurch gekennzeichnet, dass**
- das Funktionsmodul (1) Werte (14) von Attributen, die Eigenschaften von wenigstens einer Variablen der Funktionseinheit (15) beschreiben, an die Steuerungselektronik (2) sendet,
- die Steuerungselektronik (2) in Abhängigkeit von den Attributwerten (14) unter Verwendung der Bildrahmendaten (23) gemäß einem Regelwerk (24) Bildschirmdarstellungen (33, 34, 35, 36, 37) erzeugt, die von der Betriebssoftware (22) unabhängig sind und die Benutzerschnittstelle (30) zumindest temporär ergänzen, und
- die Bildschirmdarstellungen (33, 34, 35, 36, 37) einschließlich einem in einer der Bildschirmdarstellungen (34, 36, 37) integrierten Wert der Variablen auf einem Display (25) angezeigt werden.

2. Verfahren nach Anspruch 1, **dadurch gekennzeichnet, dass** die Variable ein konfigurierbarer Betriebsparameter ist und die Steuerungselektronik (2) eine Nutzereingabe erwartet, bei der der Variablen ein Wert zugewiesen, in der Steuerungselektronik (2) zwischengespeichert und an das Funktionsmodul (1) übertragen wird.

3. Verfahren nach Anspruch 1 oder 2, **dadurch gekennzeichnet, dass** eine Kennung (17) der wenigstens einen Funktionseinheit (15) oder jeweils eine Kennung für jede der Funktionseinheiten (15) in eine übergeordnete Bildschirmdarstellung (32) integriert wird, die Teil der Betriebssoftware (22) ist, und dass die Steuerungseinheit (2) über die entsprechende Kennung eine Anwahl des oder Auswahl einer der Funktionseinheiten (15) erwartet.

4. Verfahren nach einem der vorherigen Ansprüche, **dadurch gekennzeichnet, dass** das Funktionsmodul (1) zwei oder mehr Funktionseinheiten (15) umfasst, die die Steuerungselektronik (2) jeweils um eine eigene Zusatzfunktion ergänzen, und jede Funktionseinheit (15) eigene Attributwerte (14) zu wenigstens einer Variable aufweist, die das Funktionsmodul (1) an die Steuerungselektronik (2) sendet.

5. Verfahren nach einem der vorherigen Ansprüche, **dadurch gekennzeichnet, dass** für jede Funktionseinheit (15) eine eigene Bildschirmdarstellung (33, 35) erzeugt wird.

6. Verfahren nach Anspruch 5, **dadurch gekennzeichnet, dass** in der jeweiligen, einer Funktionseinheit zugeordneten Bildschirmdarstellung (33, 35) eine Kennung (18) der wenigstens einen Variable, insbesondere zumindest jeder leseberechtigten Variable der Funktionseinheit (15) integriert wird, und dass die Steuerungseinheit (2) über die entsprechende Kennung eine Anwahl des oder Auswahl einer der Variablen erwartet.

7. Verfahren nach einem der vorherigen Ansprüche, **dadurch gekennzeichnet, dass** für die oder jede Variable eine untergeordnete Bildschirmdarstellung (34, 36, 37) erzeugt wird, die der Bildschirmdarstellung (33, 35) derjenigen Funktionseinheit (15) nachgeordnet ist, welcher die jeweilige Variable zugeordnet ist, und dass eine Wiedergabe des aktuellen Werts der Variable in der untergeordneten Bildschirmdarstellung (34, 36, 37) erfolgt.

8. Verfahren nach einem der vorherigen Ansprüche, **dadurch gekennzeichnet, dass** das Funktionsmodul (1) Hauptattribute (7) umfasst, die Eigenschaften der jeweiligen Funktionseinheit (15) beschreiben, insbesondere eine Kennung (17) der Funktionseinheit (15) oder die Anzahl (29) der Variablen der Funktionseinheit, und dass das Funktionsmodul (1) Werte (14a) der Hauptattribute (7) an die Steuerungselektronik (2) sendet, welche diese Werte (14a) bei der Erzeugung der Bildschirmdarstellungen (33, 34, 35, 36, 37) verwendet werden.

9. Verfahren nach einem der vorherigen Ansprüche, **dadurch gekennzeichnet, dass** die Attribute der wenigstens einen Variable Grundattribute (8) und wenigstens ein variablenspezifisches Attribut (9) umfassen, das oder die von einem der Grundattribute (8) abhängig ist/sind.

10. Verfahren nach einem der vorherigen Ansprüche, **dadurch gekennzeichnet, dass** die Wiedergabe des Werts der Variablen in der Bildschirmdarstellung (34, 36, 37) mit führenden Nullen aufgefüllt wird, wenn der Wert der Variable eine Anzahl von Vorkommastellen aufweist, die kleiner ist, als eine Anzahl anzuzeigender Vorkommastellen, die in einem Attribut der Variable definiert ist.

11. Verfahren nach einem der vorherigen Ansprüche, **dadurch gekennzeichnet, dass** die Wiedergabe des Werts der Variable in der Bildschirmdarstellung (34, 36, 37) auf eine Anzahl anzuzeigender Nachkommastellen begrenzt wird, die in einem Attribut der Variable definiert ist.

12. Verfahren zumindest nach Anspruch 2, **dadurch gekennzeichnet, dass** der bei der Nutzereingabe eingebbare Wertebereich auf einen minimalen und/ oder maximalen Einstellwert der Variable begrenzt wird, der oder die jeweils in einem Attribut der Variable definiert ist/ sind.

13. Verfahren zumindest nach Anspruch 2, **dadurch gekennzeichnet, dass** die Eingabe des Werts der Variablen bei der Nutzereingabe auf eine Schrittweite festgelegt wird, die in einem Attribut der Variable definiert ist.

14. Verfahren nach einem der vorherigen Ansprüche, **dadurch gekennzeichnet, dass** die Wiedergabe des Werts der Variablen in der Bildschirmdarstellung (34, 36, 37) mit einer physikalischen Einheit erfolgt, die in einem Attribut der Variable definiert ist.

15. Verfahren zumindest nach Anspruch 2, **dadurch gekennzeichnet, dass** die Steuerungselektronik (2) für die Nutzereingabe einen numerischen Editor aktiviert, wenn eines der Attribute angibt, dass der Datentyp der Variable numerisch ist.

16. Verfahren zumindest nach Anspruch 2, **dadurch gekennzeichnet, dass** die Steuerungselektronik (2) für die Nutzereingabe eine durch die Attribute definierte Liste mit Optionen in die Bildschirmdarstellung integriert, wenn eines der Attribute angibt, dass der Datentyp der Variable eine Auswahlliste ist.

17. Verfahren zumindest nach Anspruch 2, **dadurch gekennzeichnet, dass** die Steuerungselektronik (2) für die Nutzereingabe einen alphanumerischen Editor (38) aktiviert, insbesondere in die Bildschirmdarstellung (37) integriert, wenn eines der Attribute angibt, dass der Datentyp der Variable eine Zeichenkette ist.

18. Verfahren zumindest nach Anspruch 2, **dadurch gekennzeichnet, dass** die Steuerungselektronik (2) eine Eingabe durch den alphanumerischen Editor (38) auf eine Maximalzeichenlänge begrenzt, die in einem Attribut der Variable definiert ist.

19. Verfahren zumindest nach Anspruch 2, **dadurch gekennzeichnet, dass** im Falle einer Zeichenkette als Nutzereingabe eine Überprüfung des eingegebenen Werts im Funktionsmodul (1) erfolgt und das Funktionsmodul (1) eine Fehlermeldung an die Steuerungselektronik (2) sendet, wenn die Überprüfung ergibt, dass der eingegebene Wert unzulässig ist, und dass die Steuerungselektronik (2) unter Verwendung der Bildrahmendaten (23) eine einen Fehler anzeigende Bildschirmdarstellung erzeugt, die insbesondere einen Fehlergrund enthält.

20. Elektronisches Funktionsmodul (1), **dadurch gekennzeichnet, dass** es zur Ausführung des Verfahrens nach einem der Ansprüche 1 bis 20 eingerichtet ist, soweit sich das Verfahren auf das Funktionsmodul (1) bezieht.

21. Steuerungselektronik (2) eines Kreiselpumpenaggregats, **dadurch gekennzeichnet, dass** sie zur Ausführung des Verfahrens nach einem der Ansprüche 1 bis 20 eingerichtet ist, soweit sich das Verfahren auf die Steuerungselektronik (2) bezieht.

22. Set aus einer Steuerungselektronik (2) eines Kreiselpumpenaggregats nach Anspruch 21 und einem ersten und einem zweiten Funktionsmodul (1) nach Anspruch 20, **dadurch gekennzeichnet, dass** sich die Funktionsmodule (1) in der die Steuerungselektronik (2) ergänzenden Zusatzfunktion unterscheiden und wahlweise an die Steuerungselektronik (2), insbesondere an dieselbe Kommunikationsschnittstelle (26) der Steuerungselektronik (2) anschließbar sind.
